# EUROPEAN PATENT SPECIFICATION

(11) **EP 2 843 910 B1**
(45) Date of publication and mention of the grant of the patent: **06.09.2017**
(21) Application number: 13782447.0
(22) Date of filing: 08.04.2013
(51) Int. Cl.: H04L 29/12, H04L 12/28, H04L 29/14

(54) **ADDRESS ALLOCATION METHOD, DEVICE, AND SYSTEM**
ADRESSZUWEISUNGSVERFAHREN, -VORRICHTUNG UND -SYSTEM
PROCÉDÉ, DISPOSITIF ET SYSTÈME POUR L'ALLOCATION D'UNE ADRESSE

(30) Priority: 28.04.2012 CN 201210132571
(43) Date of publication of application: 04.03.2015
(73) Proprietor: Huawei Technologies Co., Ltd., Longgang District Shenzhen, Guangdong 518129 (CN)
(72) Inventor: SU, Baowu, Shenzhen Guangdong 518129 (CN); YU, Zhouyi, Shenzhen Guangdong 518129 (CN); JIANG, Yuping, Shenzhen Guangdong 518129 (CN)
(74) Representative: Gill Jennings & Every LLP
(86) International application number: PCT/CN2013/073855
(87) International publication number: WO 2013/159641

(56) References cited:
- CN-A- 101 765 232
- CN-A- 101 888 389
- CN-A- 102 340 546
- CN-A- 102 647 486
- "Technical Report DSL Forum TR-092", 3GPP DRAFT; TR-092, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 August 2004 (2004-08-01), XP050744668, Retrieved from the Internet: URL:http://www.3gpp.org/ftp/Meetings_3GPP_ SYNC/SA/SA2/Docs/ [retrieved on 2014-01-21]
- Anonymous: "A Applying the Alcatel-Lucent 7750 Service Router for Multiservice Broadband Network Gateway Deployments", , 31 December 2010 (2010-12-31), XP055203002, Retrieved from the Internet: URL:http://www.alcatel-lucent.de/wps/Docum entStreamerServlet?LMSG_CABINET=Docs_and_R esource_Ctr&LMSG_CONTENT_FILE=Other/CPG289 6100402_7750SR_EN_AppNote.pdf [retrieved on 2015-07-16]
- YANG C HUANG Z PENG CHINA TELECOM G: "Fundamental Architecture of Services Provider's network Transitioning to IPv6 (FAST6) -- PPPoE Broadband Access; draft-yang-v6ops-fast6-pppoe-02.txt", FUNDAMENTAL ARCHITECTURE OF SERVICES PROVIDER'S NETWORK TRANSITIONING TO IPV6 (FAST6) -- PPPOE BROADBAND ACCESS; DRAFT-YANG-V6OPS-FAST6-PPPOE-02.TXT, INTERNET ENGINEERING TASK FORCE, IETF; STANDARDWORKINGDRAFT, INTERNET SOCIETY (ISOC) 4, RUE DES FALA, 11 January 2012 (2012-01-11), pages 1-20, XP015080146, [retrieved on 2012-01-11]
- TIAN CC HUANG H ET AL: "Use Case For IPv6 Transition For a Large-Scale Broadband Service Provider; draft-tian-v4v6tran-broadband-sp-usecase-0 0.txt", USE CASE FOR IPV6 TRANSITION FOR A LARGE-SCALE BROADBAND SERVICE PROVIDER; DRAFT-TIAN-V4V6TRAN-BROADBAND-SP-USECASE-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWIT, 15 September 2010 (2010-09-15), pages 1-14, XP015071167, [retrieved on 2010-09-15]
- PATRICK MOTOROLA BCS M: "DHCP Relay Agent Information Option; rfc3046.txt", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, 1 January 2001 (2001-01-01), XP015008829, ISSN: 0000-0003

## Description

### TECHNICAL FIELD

The present invention relates to information technology, and in particular, to an address assignment method, a device, and a system.

### BACKGROUND

Carrier grade net address translation (Carrier Grade Net Address Translation, CGN) refers to the technology of achieving statistic multiplexing of a current public IPv4 address by deploying Internet protocol (Internet Protocol, IP) version 4 IPv4 private addresses in large scale. The CGN, being substantially an NAT technology, is a procedure of translating an IP address in an IP datagram head to another IP address, so that multiple private IP addresses may share one public IP address.

In the prior art, in the network, backup BRASs need to be set for a broadband remote access server (Broadband Remote Access Service, BRAS), and the BRAS and a backup BRAS each are inserted with the same number of CGN single boards. If a CGN single board on the BRAS fails, the traffic on the BRAS may be switched to the backup BRAS. However, the cost of the method is high, and the process switch needs to be performed when the CGN fails, so that the implementation procedure is complicated.

"Technical Report DSL Forum TR-092" (3gpp draft) disclose BRAS requirements. The BRAS must support RFC 3046 to perform a DHCP relay agent function in the assignment of IP addresses to end user CPE, and the BRAS should support RFC 3022, Traditional IP Network Address Translator (NAT), which includes IP address and TCP/UDP port translation.

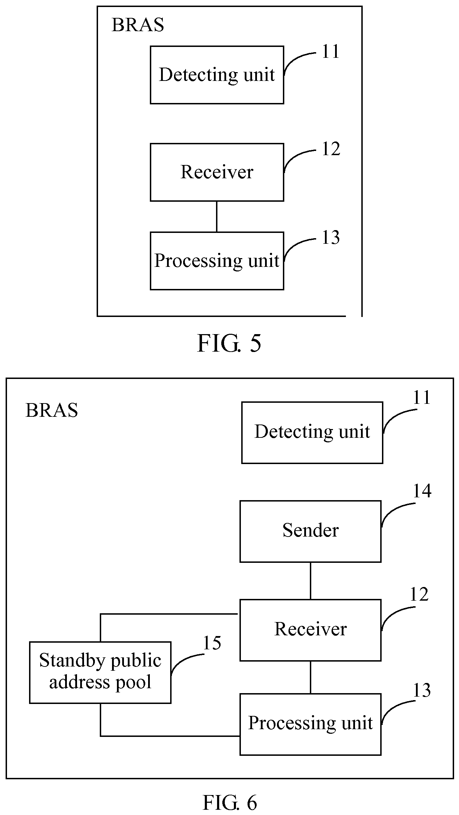

"A Applying the Alcatel-Lucent 7750 Service Router for Multiservice Broadband Network Gateway Deployments" disclose a Alcatel-Lucent implementation. The implementation includes security mechanism that operate in an autonomous manner by having the network elements automatically instantiate appropriate filtering policies based on the IP address assigned to a subscriber's MAC address through DHCP (see Figure 5).

### SUMMARY

Embodiments of the present invention provide an address assignment method, a device, and a system. The invention is defined by independent claims 1, 5 and 8.

In the address assignment method, the device, and the system according to the embodiments of the present invention, after detecting that the CGN fails, the BRAS may directly assign the public IP address to the terminal after receiving the access request sent by the terminal, so that when the CGN fails, terminal traffic transfer is not required, thereby shortening terminal service recovery time when the CGN of the BRAS fails, and lowering costs. Prior art document "Technical Report DSL Forum TR-092", 3GPP DRAFT; TR-092, 1 August 2004 discloses the requirements for Broadband Remote Access Server.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of an address assignment method provided by the present invention;
FIG. 2 is a flowchart of another embodiment of an address assignment method provided by the present invention;
FIG. 3 is a flowchart of further another embodiment of an address assignment method provided by the present invention;
FIG. 4 is a flowchart of still another embodiment of an address assignment method provided by the present invention;
FIG. 5 is a schematic structural diagram of an embodiment of a broadband remote access server provided by the present invention;
FIG. 6 is a schematic structural diagram of another embodiment of a broadband remote access server provided by the present invention;
FIG. 7 is a schematic structural diagram of an embodiment of a dynamic host configuration protocol server provided by the present invention;
FIG. 8 is a schematic structural diagram of an embodiment of a remote authentication dial in user service server provided by the present invention;
FIG. 9 is a schematic structural diagram of an embodiment of a broadband remote access server provided by the present invention;
FIG. 10 is a schematic structural diagram of an embodiment of an address assignment system provided by the present invention;
FIG. 11 is a schematic structural diagram of another embodiment of an address assignment system provided by the present invention; and
FIG. 12 is a schematic structural diagram of further another embodiment of an address assignment system provided by the present invention.

### DESCRIPTION OF EMBODIMENTS

To make the objectives, technical solutions, and advantages of the embodiments of the present invention more comprehensible, the following clearly and comprehensively describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

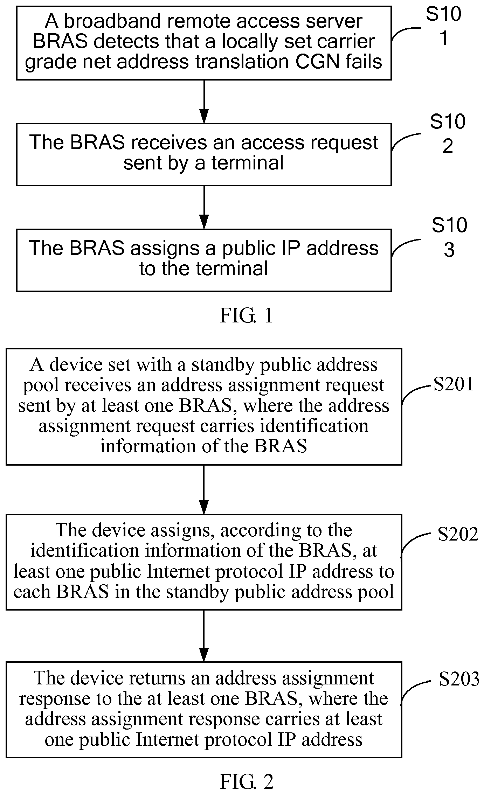

FIG. 1 is a flowchart of an embodiment of an address assignment method provided by the present invention. As shown in FIG. 1, the method is applicable to a network having a broadband remote access server BRAS, and the BRAS is set with carrier grade net address translation CGN. The method includes:
S101: The broadband remote access server BRAS detects that the locally set carrier grade net address translation CGN fails.
S 102: The BRAS receives an access request sent by a terminal.
S 103: The BRAS assigns a public IP address to the terminal.

The execution body of the steps may be any BRAS in the network.

The BRAS is locally set with a private address pool, configured to assign a private IP address to the terminal. The BRAS supports a CGN capability, which may be specifically implemented by inserting a CGN board card and other forms. The CGN set on the BRAS is set with a public address pool, and the CGN selects a public IP address from the public address pool, so as to perform network address translation (Net Address Translation, NAT) on the private IP address assigned by the BRAS to the terminal.

In the address assignment method provided by the embodiment of the present invention, the BRAS may perform failure detection on the CGN. It should be noted that for any one terminal in the network, detecting, by the BRAS, that the CGN fails may be performed before the terminal sends the access request or after the terminal sends the access request.

The access request sent by the terminal may be the request sent by the terminal to the BRAS when the terminal dials to be on line, the access request is used to request the BRAS to assign a public IP address to the terminal, so that the terminal may access the network. The access request sent by the terminal may be sent through a point to point protocol over Ethernet (Point to Point Protocol Over Ethernet, PPPoE), or may be sent through a dynamic host configuration protocol (Dynamic Host Configuration Protocol, DHCP).

Under an implementation scene, if after detecting that the CGN fails, the BRAS receives the access request sent by the terminal, in this case, the CGN cannot perform NAT translation on the terminal, so that under the implementation scene, after receiving the access request sent by the terminal, the BRAS does not need to assign the private IP address to the terminal, but may directly assign the public IP address to the terminal.

Under another implementation scene, if before detecting that the CGN fails, the BRAS receives the access request sent by the terminal, the BRAS assigns the private IP address to the terminal in the local private address pool. If detecting that the CGN fails, the BRAS may delete a user entry of the terminal from the BRAS, and forces the terminal to be off line, so as to trigger the terminal to re-send an access request to the BRAS. After receiving the access request re-sent by the terminal, the BRAS may assign the public IP address to the terminal.

As a feasible implementation manner, a standby public address pool may be locally configured at each BRAS, and after receiving the access request sent by the terminal, the BRAS may directly assign the public IP address to the terminal in the locally configured public address pool. Optionally, the standby public address pool locally configured at each BRAS may be the same, so that when the CGN in more than two BRASs fails at the same time, the problem of address conflict may be resulted, and an address conflict detecting mechanism may be used to ensure that a public address used by each BRAS does not conflict with each other. For example, an address segment may be marked in the public address pool, and specifically, how to perform marking is not specifically limited in the embodiment of the present invention, for example, 1 represents that the device assigns the IP address segment; 0 represents that none of the BRASs assigns the address segment; 2 represents that other BRAS devices assign the IP address segment. In this way, when the CGN in a BRAS fails, the BRAS may send a notification message, the notification message carries the IP address segment to be assigned, when no address conflict information fed back by other BRASs in the network is received, the IP address segment is used, and the IP address segment is marked to be 1 in the public address pool, after receiving the notification message, other BRASs marks the IP address segment in the public address pool to be 2. Further, when the IP address segment needs to be released, it is necessary to instruct other BRASs in the network to release the IP address segment. In addition, the specific protocol type of the notification message is not specifically limited in the embodiment of the present invention, for example, may be implemented through extension of an open shortest path first (Open Shortest Path First, OSPF) protocol or an internal border gateway protocol (Internal Border Gateway Protocol, iBGP).

As another feasible implementation manner, a remote standby public address pool may be set in the network. Optionally, a standby public address pool may be set on a DHCP server. A standby public address pool may be further set on a BRAS having a DHCP server function in the network, under the implementation scene of adopting two or more BRASs having a DHCP server function, one BRAS may be used as a main device set with a standby public address pool, and other BRASs are used for backup, so that when the main BRAS fails, a standby public address pool in a backup BRAS is adopted, so as to improve the reliability of the standby public address pool provided by the BRAS. Through software configuration on the BRAS, the BRAS may have the DHCP server function. In addition, a standby public address pool may be set on a remote authentication dial in user service (Remote Authentication Dial In User Service, RADIUS) server, it should be noted that an existing RADIUS server locally has a public address pool, so a public address pool does not need to be additionally configured for the RADIUS server, and the public address pool locally set on the RADIUS server may be directly adopted as a standby public address pool when the CGN in the BRAS fails.

Under the implementation scene of setting the remote standby public address pool in the network, a device set with a standby public address pool can provide the shared standby public address pool for at least two BRASs in the network. Specifically, when the CGN on any BRAS in the network fails, the public IP address is assigned to the BRAS, so that at least more than two BRASs in the network may share the public IP address when the CGN fails.

Under the implementation scene of setting the remote standby public address pool in the network, after receiving the access request sent by the terminal, the BRAS may send the address assignment request to the device set with the standby public address pool, the request carries identification information of the BRAS, after receiving the address assignment request, the device set with the standby public address pool may assign at least one public IP address to the BRAS. The identification information of the BRAS carried by the address assignment request may be implemented through the specific identification or may be implemented through a source IP address in the address assignment request, that is, the IP address of the BRAS.

Under an implementation scene, if the device set with the standby public address pool is the DHCP server, or the BRAS having the DHCP server function, the BRAS and the DHCP server or the BRAS having the DHCP server function may communicate with each other by adopting a DHCP protocol. In an existing DHCP protocol, only one IP address may be acquired when the address assignment request is sent each time, so under the implementation scene, the BRAS may send the address assignment request to the DHCP server or the BRAS having the DHCP server function when receiving the access request sent by one terminal each time, the DHCP server or the BRAS having the DHCP server function may assign, according to the BRAS identification carried in the address assignment request, one public IP address to the BRAS from the local standby public address pool, and returns the public IP address to the BRAS through the address assignment response, and the BRAS may assign the public IP address to the terminal.

As extension of the implementation scene, the BRAS may carry the request identifier of the public IP address segment in the address assignment request, and requests to acquire a segment of public IP address through the request identifier of the public IP address segment. The DHCP server or the BRAS having the DHCP server function may assign, according to the BRAS identification and the request identifier of the public IP address segment which are carried in the address assignment request, a public IP address and a mask to the BRAS in the standby public address pool, and then return the public IP address and the mask to the BRAS through the address assignment response, after receiving the address assignment response returned by the device, the BRAS acquires, according to the public IP address and the mask, a segment of public IP address corresponding to the public IP address and the mask.

Under another implementation scene, if the device set with the standby public address pool is the RADIUS server, under the implementation scene, after receiving the access request sent by the terminal, the BRAS sends the address assignment request to the RADIUS server, the RADIUS assigns, according to the BRAS identification carried in the address assignment request, a segment of public IP address to the BRAS, carries the segment of public IP address in the address assignment response, and feeds back the address assignment response to the BRAS sending the address assignment request.

It should be noted that under the implementation scene in which the BRAS acquires the segment of public IP address from the device set with the standby public address pool, each time after the BRAS receives the access request sent by the terminal, the BRAS may assign a public IP address to the terminal from the acquired segment of public IP address.

Further, under the implementation scene in which the BRAS acquires the segment of public IP address from the device set with the standby public address pool, the BRAS may release aggregation route information of the segment of the public IP address. Optionally, after detecting that the CGN fails, the BRAS may revoke the route information of the public IP address in the public address pool on the CGN.

Further, after detecting that the CGN recovers from the failure, the BRAS re-releases the route information of the public IP address in the local public address pool of the CGN. In addition, after the CGN recovers from the failure, after receiving the access request sent by the terminal, the BRAS may assign the private IP address to the terminal, so after the terminal is switched to the private IP address, the BRAC may revoke the aggregation route information.

In the address assignment method provided by this embodiment, after detecting that the CGN fails, the BRAS may directly assign the public IP address to the terminal after receiving the access request sent by the terminal, so that when the CGN fails, terminal traffic transfer is not required, and backup CGN does not need to be configured for the BRAS, thereby shortening terminal service recovery time when the CGN of the BRAS fails, and lowering costs.

FIG. 2 is a flowchart of another embodiment of an address assignment method provided by the present invention. As shown in FIG. 2, the method is applicable to a network having a broadband remote access server BRAS, and the BRAS is set with carrier grade net address translation CGN. The method includes:
S201: A device set with a standby public address pool receives an address assignment request sent by at least one BRAS, where the address assignment request carries identification information of the BRAS.
S202: The device assigns, according to the identification information of the BRAS, at least one public Internet protocol IP address to each BRAS in the standby public address pool.
S203: The device returns an address assignment response to the at least one BRAS, where the address assignment response carries at least one public Internet protocol IP address.

The execution body of the steps is the device set with the standby public address pool.

The device set with the standby public address pool may be a DHCP server, or may be at least one BRAS having the DHCP server function in the network, or may be a RADIUS server. Under an implementation scene in which the devices set with the standby public address pool are two or more than two BRASs having the DHCP server function, a standby public address pool may be set on each BRAS, and one BRAS may be used as a main device, and other BRASs may be used as backup devices, so that when the main device fails, other backup devices are adopted to assign the public IP address, thereby improving reliability of the BRAS.

The device set with the standby public address pool may provide the standby public address pool for any BRAS in the network, or may provide a shared standby public address pool for any at least two BRASs. When the CGN of any one or more BRASs in the network fails, public IP addresses are assigned to the BRASs from the standby public address pool.

The device set with the standby public address pool may receive the address assignment request sent by at least one BRAS. After receiving the address assignment request, the device set with the standby public address pool may assign, according to the BRAS identification carried in the address assignment request, at least one public IP address to the BRAS.

Under an implementation scene, if the device set with the standby public address pool is the DHCP server connected to a CR, or the BRAS having the DHCP server function, the BRAS and the DHCP server or the BRAS having the DHCP server function may communicate with each other by adopting a DHCP protocol. In an existing DHCP protocol, only one IP address may be acquired when the address assignment request is sent each time, so under the implementation scene, after each time when receiving the address assignment request sent by one BRAS, the DHCP server or the BRAS having the DHCP server function reserves, according to the identification information of the BRAS, one public IP address for the BRAS in the local standby public address pool, and carries the public IP address in the address assignment response.

As a feasible implementation manner, the BRAS may carry a request identifier of a public IP address segment in the address assignment request, and requests to acquire a segment of public IP address through the request identifier of the public IP address segment. After receiving the address assignment request, the DHCP server or the BRAS having the DHCP server function may assign, according to the BRAS identification and the request identifier of the public IP address segment carried in the address assignment request, one public IP address to the BRAS in the standby public address pool, and assigns a mask to the public IP address, and then returns the public IP address and the mask to the BRAS through the address assignment response, so that the BRAS may acquire, according to the public IP address and the mask, a segment of public IP address corresponding to the public IP address and the mask.

Under another implementation scene, if the device set with the standby public address pool is the RADIUS server, under the implementation scene, after receiving the address assignment request, the RADIUS server assigns, according to the BRAS identification carried in the address assignment request, a segment of public IP address to the BRAS, carries the segment of public IP address in the address assignment response, and feeds back the address assignment response to the BRAS sending the address assignment request.

In the address assignment method provided by this embodiment, the standby public address pool may be set in the network, the standby public address pool may be set on the DHCP server, or may be set on the BRAS having the DHCP server function, or may be set on the RADIUS server. When the CGN on any BRAS in the network fails, the BRAS may request to acquire the public IP address from the device set with the standby public address pool, and assign the public IP address to the terminal by using the public IP address acquired from the standby public address pool. Therefore, after the CGN on any BRAS in the network fails, the BRAS may acquire the public IP address from the device set with the standby public address pool, so as to directly assign the public IP address to the terminal from the acquired public IP address, so that when the CGN fails, terminal traffic transfer is not required, thereby shortening terminal service recovery time when the CGN of the BRAS fails, and lowering costs.

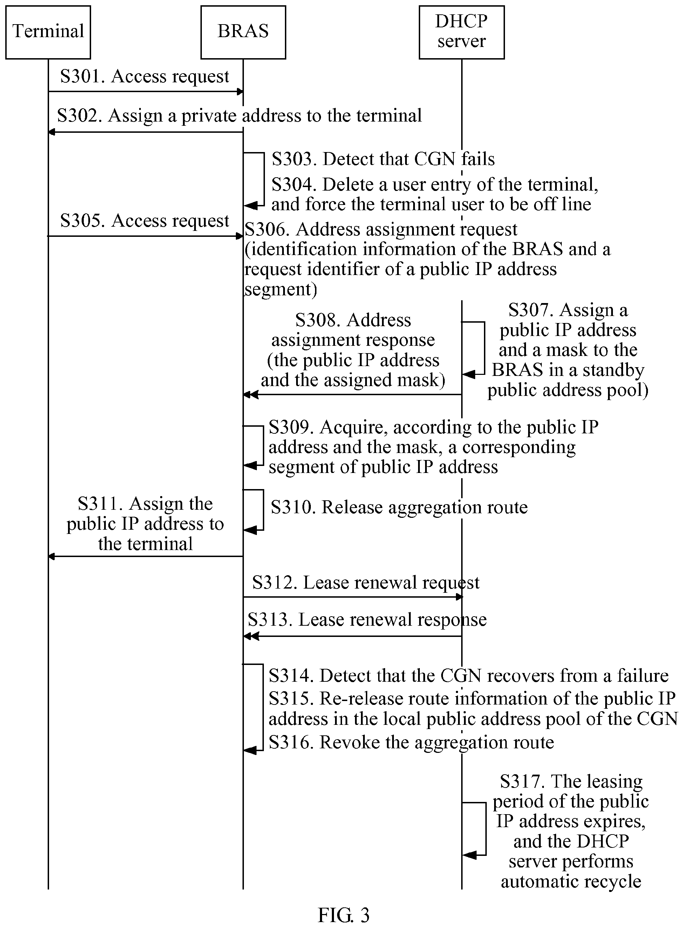

In the above embodiments, the address assignment method provided by the embodiment of the present invention is respectively described from the BRAS side and the device side set with the standby public address pool. FIG. 3 is a flowchart of further another embodiment of an address assignment method provided by the present invention. As shown in FIG. 3, in this embodiment, for example, a BRAS acquires a public IP address from a DHCP server set with a standby public address pool, and a process of the address assignment method provided by the embodiment of the present invention is described in detail.

In this embodiment, a metropolitan area network includes multiple BRASs, and each BRAS is inserted with a CGN plate card to support CGN characteristics. A CR connected to the BRASs is connected to a DHCP server to be used as a shared remote standby public address pool of the BRASs. It should be understood that the DHCP server involved in this embodiment may be implemented through a BRAS having a DHCP server function in the metropolitan area network. Through software configuration on the BRAS, the BRAS may have the DHCP server function. In addition, in order to improve the reliability of the BRAS used as the DHCP server, usually more than two BRASs having the DHCP server function may be set, one BRAS is used as a main device, and other BRASs are used as backup devices, so that when the main device fails, other backup BRASs may be adopted to assign standby public IP addresses.

Any BRAS in the metropolitan area network may configure a public address pool and a private address pool under one domain. The public address pool is the standby public address pool set on the DHCP server. The method specifically includes:
S301: A terminal sends an access request to a BRAS.
S302: The BRAS assigns a private IP address to the terminal in a local private address pool.
S303: The BRAS detects that CGN fails.
S304: The BRAS deletes a user entry of the terminal on the BRAS, and forces the terminal user to be off line.

Specifically, if the terminal adopts a PPPoE access mode, the BRAS deletes the user entry of the terminal, so that point to point (Point to Point, PPP) heartbeat detection between the terminal and the BRAS is lost, and a PPP connection is interrupted. If the terminal adopts an Internet protocol over Ethernet (Internet Protocol over Ethernet, IPoE) access mode, the terminal may find that it cannot access the network.

S305: The terminal re-sends an access request to the BRAS.

If the terminal adopts the PPPoE access mode, the user may usually automatically re-dial, that is, the terminal may automatically re-send an access request to the BRAS. If the terminal adopts the IPoE access mode, usually the user needs to manually re-dial.

S306: The BRAS sends an address assignment request to the DHCP server, the address assignment request carries identification information of the BRAS and a request identifier of a public IP address segment, where the request identifier of the public IP address segment is used to request to acquire a segment of public IP address.

S307: The DHCP server assigns, according to the identification information of the BRAS, a public IP address and a mask to each BRAS in a standby public address pool.

S308: The DHCP server returns an address assignment response to the BRAS, where the address assignment response carries the assigned public IP address and the assigned mask.

S309: The BRAS acquires, according to the public IP address and the mask, a corresponding segment of public IP address.

S310: The BRAS releases aggregation route information of the segment of public IP address corresponding to the public IP address and the mask.

A segment of public IP address assigned by DHCP server to each BRAS may be reserved by adopting a form of the public IP address plus the mask. The DHCP server may carry, in the address assignment response, the public IP address and the mask assigned to the BRAS, or may carry a head address and a tail address of the address segment in the address assignment response, or may carry a detailed address list in the address assignment response.

The BRAS and the DHCP server communicate with each other by adopting a DHCP protocol, the address assignment request sent by the BRAS to the DHCP server is a DHCP address assignment request.

It should be noted that if a layer 3 network exists between the BRAS and the DHCP server, the BRAS using as a client needs to use a DHCP relay (Relay) to acquire the public IP address from the DHCP server. Under the implementation scene, a DHCP Relay function needs to be built in the BRAS, so as to be used as a relay for acquiring the public IP address from the DHCP server. Under the implementation scene, after the BRAS device receives the access request sent by the terminal, the address assignment request initiated by the BRAS used as the DHCP Replay to the DHCP server is a DHCP relay packet. If the terminal adopts the PPPoE access manner, the BRAS used as the DHCP Relay is triggered to send the address assignment request to acquire the public IP address.

In addition, under an implementation scene in which more than two BRASs having the DHCP server function are adopted to set the remote public address pool, if the main device fails, after sending a DHCP relay packet for several times, the BRAS does not receive the response returned by the main device, the BRAS may send a DHCP relay packet request to other standby BRASs to acquire the public IP address.

The address assignment request sent by the BRAS used as the DHCP Relay to the remote DHCP server adopts the DHCP relay protocol, usually the DHCP relay protocol can only acquire one IP address, and after acquiring the public IP address, the BRAS needs to release route information of the public IP address outside, but if the BRAS releases, according to a single public IP address, the route of 32 bits, the route information amount to be release cannot be accepted by a carrier. Therefore, by modifying the DHCP protocol, the DHCP server may support to reserve a segment of public IP address for one BRAS.

The request identifier of the public IP address segment may be carried in the address assignment request, where the request identifier of the public IP address segment is used to request to acquire a segment of public IP address.

Specifically, Option82 information is carried in the DHCP relay request initiated by the BRAS, where the Option82 information is location information of a BRAS device, and may be used to uniquely identify one BRAS, the Option82 information is the identification information of the BRAS involved in the embodiment of the present invention.

As a feasible implementation manner, sub-option130 may be carried in the Option82 information, where the sub-option130 represents to request to acquire a segment of public IP address. After receiving the Option82 information carrying the sub-option130, the DHCP server may assign a segment of public IP address to the BRAS from the locally configured standby public address pool.

According to regulation of RFC306 of DHCP, sub-option is shown in the following table:

| Code | Len | Value |
|---|---|---|
| 130 | 1 | 0-32 |

Value is a mask length of the public IP address assigned by the DHCP server to the BRAS. On the DHCP server, the network segment after the public IP address plus the mask is reserved for the BRAS, and the BRAS device may use the aggregation route information after the public IP address plus the mask as the user route for release.

As another feasible implementation manner, Option55 information is inserted or modified in the DHCP relay request initiated by the BRAS, and through the Option55 information, a segment of public IP address is requested to be acquired. The applied Option may be 109, that is, after receiving the DHCP relay request, the DHCP server may carry Option109 information in the address assignment response.

According to regulation of RFC2132 of DHCP, Option is shown in the following table:

| Code | Len | Value |
|---|---|---|
| 109 | 1 | 0-32 |

Value is a mask length of the public IP address assigned by the DHCP server to the BRAS. On the DHCP server, the network segment after the public IP address plus the mask is reserved for the BRAS, and the BRAS device may use the aggregation route information after the public IP address plus the mask as the user route for release.

In the above, only several feasible implementation manners of carrying the request identifier of the public IP address segment in the address assignment request are provided. It should be understood that the request identifier of the public IP address segment used to assign a segment of public IP address to the DHCP server is carried in the DHCP relay request through any self-defined field in the RFC2132.

S311: The BRAS assigns the public IP address to the terminal in the acquired segment of public IP address.

It should be noted that under an implementation scene in which a layer 3 network exists between the BRAS and the DHCP server, subsequently, when another terminal dials for connection, that is, when the BRAS receives the access request sent by another terminal, the BRAS may assign the public IP address to the terminal from the acquired public IP address segment, if the terminal accesses by adopting the PPPoE manner, the BRAS provides the public IP address to the IPCP for use. If the acquired public IP address segment is used up, the BRAS receives the access request sent by the terminal, the BRAS re-sends an address assignment request to the DHCP server, that is, re-starts the procedure of sending the DHCP relay request, and acquires a new public address segment, so on and so forth, until public IP addresses are assigned to all terminals sending the access request.

Similarly, under the implementation scene in which the layer 3 network exists between the BRAS and the DHCP server, subsequently, when another terminal dials for connection, that is, when the BRAS receives the access request sent by another terminal, the BRAS may assign the public IP address to the terminal from the acquired public IP address segment. If the acquired public IP address segment is used up, the BRAS receives the access request sent by the terminal, the BRAS re-sends a DHCP address assignment request to the DHCP server, and acquires a new public address segment, so on and so forth, until public IP addresses are assigned to all terminals sending the access request.

S312: The BRAS sends a lease renewal request to the DHCP server.

S313: the DHCP server returns a lease renewal response.

The standby public address pool set on the DHCP server may provide sharing of the public IP address for at least two BRASs in the network. Therefore, in order to prevent one or more BRASs from occupying the standby public IP address for a long time, a relatively short leasing period, for example, 60 minutes, may be set on the DHCP server, when the BRAS uses the public address pool, if the leasing period expires, the BRAS may send a lease renewal request to the DHCP server, so as to use a standby public IP address in a next leasing period.

S314: The BRAS detects that the CGN recovers from a failure.

S315: The BRAS re-releases route information of the public IP address in the local public address pool of the CGN.

S316: The BRAS revokes the aggregation route information after the terminal is switched to the private IP address.

S317: The leasing period of the public IP address expires, and the DHCP server performs automatic recycle.

After detecting that the CGN recovers from the failure, the BRAS re-releases the route information of the public IP address in the local public address pool of the CGN. After the access request sent by the terminal is received, the private IP address is assigned to the terminal again, and NAT translation is performed through the CGN. After the last public terminal is off line, the BRAS may revoke the route information of the public IP address in the local public address pool of the CGN.

In the address assignment method provided by this embodiment, the standby public address pool may be set on the DHCP server, or the standby public address pool is set on the BRAS having the DHCP server function, after the CGN of at least one of any BRASs in the network fails, the BRAS may request to acquire the public IP address from the DHCP server, and the DHCP server may assign a segment of public IP address to each BRAS from the locally configured public address pool. Therefore, when any BRAS in the network fails, the public IP address may be directly assigned to the terminal on the remote DHCP server, terminal traffic transfer is not required, and backup CGN does not need to be configured for the BRAS, thereby shortening user service recovery time when the CGN of the BRAS fails, and lowering costs. Further, multiple BRASs in the network may share the public address pool on the DHCP server, thereby further lowering the costs.

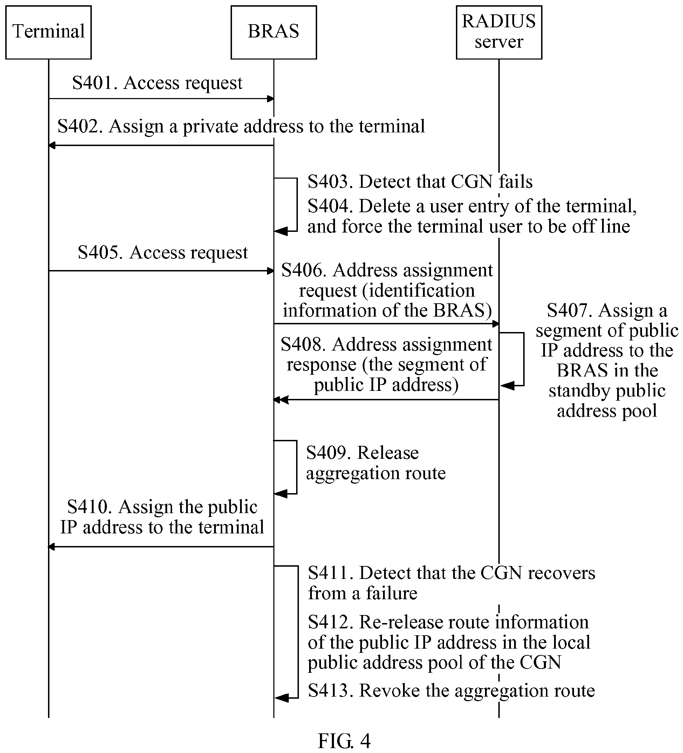

FIG. 4 is a flowchart of still another embodiment of an address assignment method provided by the present invention. As shown in FIG. 4, in this embodiment, for example, a device set with a standby public address pool is a RADIUS server, and a process of the address assignment method provided by the embodiment of the present invention is described in detail

In this embodiment, a metropolitan area network includes multiple BRASs, and each BRAS is inserted with a CGN plate card to support CGN characteristics. A CR connected to the BRASs is connected to the RADIUS server to be used as a shared remote standby public address pool of the BRASs. It should be noted that an existing RADIUS server is configured with a public address pool, so the public address pool of the RADIUS server may be used as a remote standby public address pool in the network.

The RADIUS server has user authentication, accounting, and other functions, so a user type may be pre-configured on the RADIUS server, specifically, a CGN type and a common type may be configured. The RADIUS server may configure a public IP address pool for a user of a CGN type.

The method specifically includes:
S401: A terminal sends an access request to a BRAS.
S402: The BRAS assigns a private address to the terminal in a local private address pool.
S403: The BRAS detects that CGN fails.
S404: The BRAS deletes a user entry of the terminal on the BRAS, and forces the terminal user to be off line.
S405: The terminal re-sends an access request to the BRAS.

The procedure of S401-S405 is similar to the procedure of S301-S305 in the previous embodiment, and for specific content, reference is made to relevant description of S301-S305 in the previous embodiment

S406: The BRAS sends an address assignment request to the RADIUS server, where the address assignment request carries identification information of the BRAS.

S407: The RADIUS server assigns, according to the identification information of the BRAS, a segment of public IP address to the BRAS.

The RADIUS server may assign a segment of public IP address to the BRAD by using a Frame Route attribute.

S408: The RADIUS server returns an address assignment response to the BRAS, where the address assignment response carries the assigned segment of public IP address.

S409: The BRAS releases aggregation route information of the segment of public IP address.

S410: The BRAS assigns the public IP address to the terminal in the acquired segment of public IP address.

After receiving the segment of public IP address assigned by the RADIUS server, the BRAS device may cache the segment of public IP address, and assigns the public address to the terminal.

S411: The BRAS detects that the CGN recovers from a failure.

S412: The BRAS re-releases route information of the public IP address in the local public address pool of the CGN.

S413: The BRAS revokes the aggregation route information after the terminal is switched to the private IP address.

After detecting that the CGN recovers from the failure, the BRAS re-releases the route information of the public IP address in the local public address pool of the CGN. After the access request sent by the terminal is received, the private IP address is assigned to the terminal again, and NAT translation is performed through the CGN. After the last public terminal is off line, the BRAS may revoke the route information of the public IP address in the local public address pool of the CGN.

In the address assignment method provided by this embodiment, the standby public address pool may be set on the RADIUS server. After the CGN on the BRAS in the network fails, the BRAS may request to acquire the public IP address from the RADIUS server, and the RADIUS server may assign a segment of public IP address to each BRAS from the locally configured public address pool. Therefore, when any BRAS in the network fails, the public IP address may be directly assigned to the terminal on the remote RADIUS server, terminal traffic transfer is not required, and backup CGN does not need to be configured for the BRAS, thereby shortening user service recovery time when the CGN of the BRAS fails, and lowering costs. Further, multiple BRASs in the network may share the public address pool on the DHCP server, thereby further lowering the costs.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

FIG. 5 is a schematic structural diagram of an embodiment of a broadband remote access server provided by the present invention. As shown in FIG. 5, the BRAS is set with carrier grade net address translation CGN, and the broadband remote access server includes: a detecting unit 11, a receiver 12, and a processing unit 13;
the detecting unit 11 is configured to detect that the locally set carrier grade net address translation CGN fails;
the receiver 12 is configured to receive an access request sent by a terminal; and
the processing unit 13 is configured to assign a public IP address to the terminal.

FIG. 6 is a schematic structural diagram of another embodiment of a broadband remote access server provided by the present invention. As shown in FIG. 6, optionally, the broadband remote access server further includes:
a sender 14, configured to send an address assignment request to a device set with a standby public address pool, where the address assignment request carries identification information of the BRAS,
correspondingly, the receiver 12 may be further configured to: receive an address assignment response returned by the device set with the standby public address pool, where the address assignment response carries at least one public Internet protocol IP address; and
correspondingly, the processing unit 13 may be specifically configured to: assign a public IP address to the terminal from the at least one public IP address.

Further, the broadband remote access server may further include:
a standby public address pool 15, configured to store standby public IP addresses; and
correspondingly, the processing unit 13 may be specifically configured to: assign a public IP address to the terminal from the locally configured standby public address pool.

Optionally, the standby public address pool on the device set with the standby public address pool may provide standby public IP addresses for the BRAS and at least one of other BRASs in a network.

As a feasible implementation manner, the device set with the standby public address pool may be a dynamic host configuration protocol DHCP server or a BRAS having a DHCP server function in the network, and the address assignment response received by the receiver 12 may carry a public IP address assigned by the DHCP server or the BRAS having the DHCP server function in the network to the BRAS.

Optionally, the address assignment request sent by the sender 14 may further include: a request identifier of a public IP address segment, used to request to acquire a segment of public IP address;
correspondingly, the address assignment response received by the receiver 12 may further carry a mask assigned to the public IP address, where the mask is assigned by the DHCP server or the BRAS having the DHCP server function in the network.
correspondingly, the processing unit 13 may be further configured to: acquire, according to the public IP address and the mask, a segment of public IP address corresponding to the public IP address and the mask.

As a feasible implementation manner, the device set with the standby public address pool may also be a remote authentication dial in user service RADIUS server, and the address assignment response received by the receiver 12 may carry a segment of public IP address assigned by the RADIUS server to the BRAS.

Further, the sender 14 may be further configured to: release aggregation route information of the segment of public IP address.

Optionally, the detecting unit 11 may be further configured to: detect that the CGN recovers from a failure; and
the sender 14 may be further configured to: revoke the aggregation route information.

Optionally, the receiver 12 may be further configured to: receive the access request sent by the terminal;
correspondingly, the processing unit 13 may be further configured to: assign the private IP address to the terminal in the private address pool on the BRAS; and
further, the processing unit 13 may be further configured to, when the detecting unit detects that the CDN fails, delete a user entry of the terminal on the broadband remote access server so that the terminal re-sends an access request.

The broadband remote access server provided by the embodiment of the present invention, corresponding to the address assignment method provided by the embodiment of the present invention, is an execution device of the address assignment method, for the specific process of executing the address assignment method, reference is made to the embodiment of the method provided by the present invention, and details are not described here.

In the broadband remote access server provided by the embodiment of the present invention, after it is detected that the CGN fails, and after the access request sent by the terminal is received, the public IP address is directly assigned to the terminal, so that when the CGN fails, terminal traffic transfer is not required, and backup CGN does not need to be configured for the BRAS, thereby shortening terminal service recovery time when the CGN of the BRAS fails, and lowering costs.

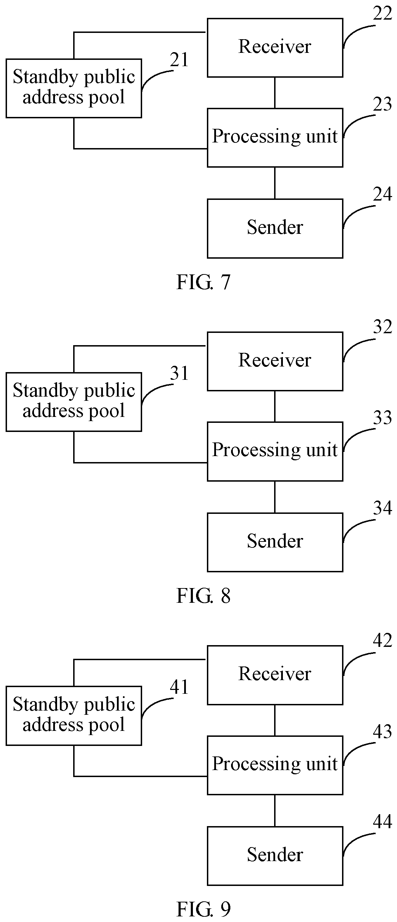

FIG. 7 is a schematic structural diagram of an embodiment of a dynamic host configuration protocol server provided by the present invention. As shown in FIG. 7, the dynamic host configuration protocol server is applicable to a network having a broadband remote access server BRAS, where the BRAS is set with carrier grade net address translation CGN, the dynamic host configuration protocol server includes: a standby public address pool 21, a receiver 22, a processing unit 23, and a sender 24;
the standby public address pool 21 is configured to store standby public IP addresses;
the receiver 22 is configured to receive an address assignment request sent by at least one BRAS, where the address assignment request carries identification information of the BRAS;
the processing unit 23 is configured to assign, according to the identification information of the BRAS, at least one public Internet protocol IP address to each BRAS in the standby public address pool; and
the sender 24 is configured to return an address assignment response to the at least one BRAS, where the address assignment response carries at least one public Internet protocol IP address.

Optionally, the standby public address pool 21 may provide standby public IP addresses for at least two BRASs in the network.

Optionally, the processing unit 23 may be specifically configured to: assign, according to the identification information of the BRAS, a public IP address to each BRAS in the standby public address pool;
correspondingly, the address assignment response returned by the sender 24 to the at least one BRAS may carry the public IP address assigned by the processing unit.

Optionally, the address assignment request received by the receiver 22 may further include: a request identifier of a public IP address segment, used to request to acquire a segment of public IP address;
correspondingly, the processing unit 23 may be further configured to: assign a mask to the public IP address;
correspondingly, the address assignment response returned by the sender 24 to the at least one BRAS may further carry the mask, so that the at least one BRAS acquires, according to the public IP address and the mask, a segment of public IP address.

The dynamic host configuration protocol server provided by the embodiment of the present invention, corresponding to the address assignment method provided by the embodiment of the present invention, is an execution device of the address assignment method, for the specific process of executing the address assignment method, reference is made to the embodiment of the method provided by the present invention, and details are not described here.

In the dynamic host configuration protocol server provided by the embodiment of the present invention, when the CGN on the BRAS in the network fails, the BRAS may request to acquire the public IP address from the DHCP server, and the DHCP server may assign a segment of public IP address to each BRAS from the locally configured public address pool. When any BRAS in the network fails, the public IP address is directly assigned to the terminal from the remote DHCP server, terminal traffic transfer is not required, and backup CGN does not need to be configured for the BRAS, thereby shortening user service recovery time when the CGN of the BRAS fails, and lowering costs. Further, multiple BRASs in the network may share the public address pool on the DHCP server, thereby further lowering the costs.

FIG. 8 is a schematic structural diagram of an embodiment of a remote authentication dial in user service server provided by the present invention. As shown in FIG. 8, the remote authentication dial in user service server is applicable to a network having a broadband remote access server BRAS, where the BRAS is set with carrier grade net address translation CGN, the remote authentication dial in user service server includes: a standby public address pool 31, a receiver 32, a processing unit 33, and a sender 34;
the standby public address pool 31 is configured to store standby public IP addresses;
the receiver 32 is configured to receive an address assignment request sent by at least one BRAS, where the address assignment request carries identification information of the BRAS;
the processing unit 33 is configured to assign, according to the identification information of the BRAS, at least one public Internet protocol IP address to each BRAS in the standby public address pool; and
the sender 34 is configured to return an address assignment response to the at least one BRAS, where the address assignment response carries at least one public Internet protocol IP address.

Optionally, the processing unit 33 may be specifically configured to: assign, according to the identification information of the BRAS, a segment of public IP address to each BRAS in the standby public address pool;
the address assignment response returned by the sender 34 to the at least one BRAS may carry the segment of public IP address.

The remote authentication dial in user service server provided by the embodiment of the present invention, corresponding to the address assignment method provided by the embodiment of the present invention, is an execution device of the address assignment method, for the specific process of executing the address assignment method, reference is made to the embodiment of the method provided by the present invention, and details are not described here.

In the remote authentication dial in user service server provided by the embodiment of the present invention, the standby public address pool may be set on the RADIUS server. When the CGN on the BRAS in the network fails, the BRAS may request to acquire the public IP address from the RADIUS server, and the RADIUS server may assign a segment of public IP address to each BRAS from the locally configured public address pool. When any BRAS in the network fails, the public IP address is directly assigned to the terminal from the remote RADIUS server, terminal traffic transfer is not required, and backup CGN does not need to be configured for the BRAS, thereby shortening user service recovery time when the CGN of the BRAS fails, and lowering costs. Further, multiple BRASs in the network may share the public address pool on the RADIUS server, thereby further lowering the costs.

FIG. 9 is a schematic structural diagram of an embodiment of a broadband remote access server provided by the present invention. As shown in FIG. 9, the broadband remote access server has a dynamic host configuration protocol DHCP server function, is applicable to a network having a broadband remote access server BRAS, where the BRAS is set with carrier grade net address translation CGN, and the broadband remote access server includes: a standby public address pool 41, a receiver 42, a processing unit 43, and a sender 44;
the standby public address pool 41 is configured to store standby public IP addresses;
the receiver 42 is configured to receive an address assignment request sent by at least one BRAS, where the address assignment request carries identification information of the BRAS;
the processing unit 43 is configured to assign, according to the identification information of the BRAS, at least one public Internet protocol IP address to each BRAS in the standby public address pool; and
the sender 44 is configured to return an address assignment response to the at least one BRAS, where the address assignment response carries at least one public Internet protocol IP address.

Optionally, the processing unit 43 may be specifically configured to: assign, according to the identification information of the BRAS, a segment of public IP address to each BRAS in the standby public address pool;
correspondingly, the address assignment response returned by the sender 44 to the at least one BRAS may carry the segment of public IP address.

The broadband remote access server provided by the embodiment of the present invention, corresponding to the address assignment method provided by the embodiment of the present invention, is an execution device of the address assignment method, for the specific process of executing the address assignment method, reference is made to the embodiment of the method provided by the present invention, and details are not described here.

In the broadband remote access server provided by the embodiment of the present invention, the DHCP server function may be implemented through configuration. When the CGN on the BRAS in the network fails, the BRAS may request to acquire the public IP address from the BRAS having the DHCP server function, and the BRAS having the DHCP server function may assign a segment of public IP address to each BRAS from the locally configured public address pool. When any BRAS in the network fails, the public IP address is directly assigned to the terminal from the remote BRAS having the DHCP server function, terminal traffic transfer is not required, and backup CGN does not need to be configured for the BRAS, thereby shortening user service recovery time when the CGN of the BRAS fails, and lowering costs. Further, multiple BRASs in the network may share the public address pool on the BRAS having the DHCP server function, thereby further lowering the costs.

The present invention further provides an embodiment of an address assignment system. The address assignment system includes: at least one broadband remote access server and a device set with a standby public address pool, the BRAS is set with carrier grade net address translation CGN;
the device is a dynamic host configuration protocol server, or a remote authentication dial in user service server, or a broadband remote access server having a DHCP server function.

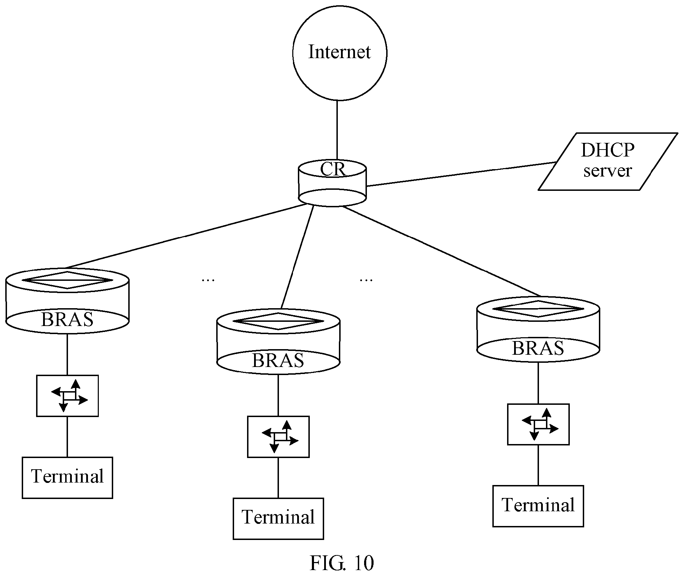

FIG. 10 is a schematic structural diagram of an embodiment of an address assignment system provided by the present invention. As shown in FIG. 10, a device set with a standby public address pool in the system is a dynamic host configuration protocol server, and the dynamic host configuration protocol server may be connected to a CR in a network.

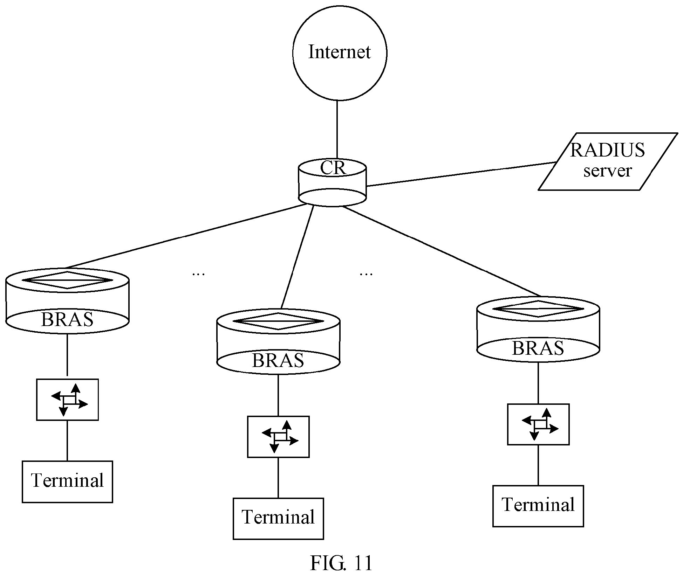

FIG. 11 is a schematic structural diagram of another embodiment of an address assignment system provided by the present invention. As shown in FIG. 11, a device set with a standby public address pool in the system is a remote authentication dial in user service server, and the remote authentication dial in user service server may be connected to a CR in a network.

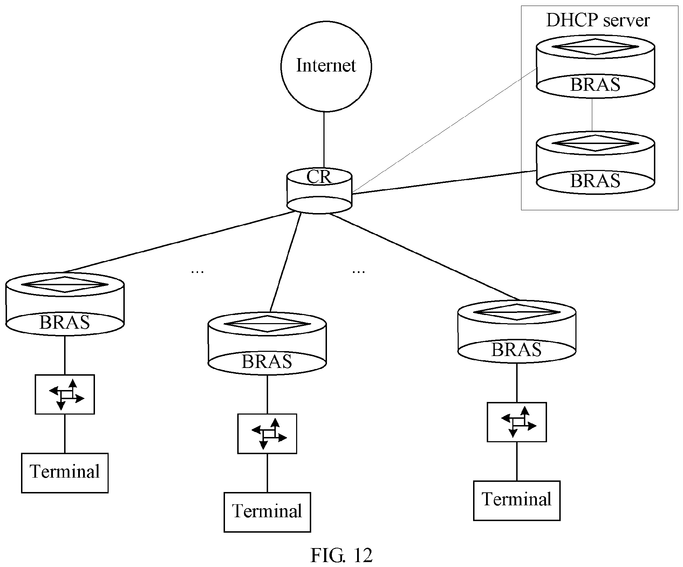

FIG. 12 is a schematic structural diagram of further another embodiment of an address assignment system provided by the present invention. As shown in FIG. 12, a device set with a standby public address pool in the system may be at least one of any broadband remote access servers having a DHCP server function in a network (FIG. 12 shows an implementation scene of two BRASs having a DHCP server function, in which one BRAS is a main device, and the other BRAS is a backup device).

The address assignment system provided by the embodiment of the present invention is corresponding to the address assignment method provided by the embodiment of the present invention, where in the involved broadband remote access server and various optional devices set with a standby public address pool, for the specific structure and the specific process of executing the address assignment method, reference is made to the embodiment of the method provided by the present invention, and details are not described here.

In the address assignment system provided by the embodiment of the present invention, after detecting that CGN fails, a BRAS directly assigns a public IP address to a terminal after receiving an access request sent by the terminal. A standby public address pool may be set in a network, the standby public address pool may be set on a DHCP server, or may be set on at least one BRAS having a DHCP server function, or may be set on a RADIUS server. When the CGN on any BRAS in the network fails, the BRAS may request to acquire a public IP address from the device set with the standby public address pool, and assign the public IP address to the terminal by using the public IP address acquired from the standby public address pool. After the CGN on the BRAS in the network fails, the BRAS may acquire the public IP address from the device set with the standby public address pool, so as to directly assign the public IP address to the terminal from the acquired public IP address, so that when the CGN fails, terminal traffic transfer is not required, thereby shortening terminal service recovery time when the CGN of the BRAS fails, and lowering costs.

It should be noted that when only one CGN is configured on the BRAS, when the CGN fails, the solutions provided by all the embodiments of the present invention may be used to enhance reliability, or when the CGN backup exists on the BRAS, or the BRAS backup exists, when all CGN devices fail, the solutions provided by the embodiments of the present invention may be used to enhance the reliability.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may be made to the technical solutions described in the foregoing embodiments, or equivalent replacements may be made to some or all the technical features thereof, without departing from the scope of the present invention, which is defined by the appended claims.

## Claims

1. An address assignment method, applicable to a network having a broadband remote access server, BRAS, wherein the BRAS supports carrier grade net address translation, CGN, capability, the method comprising:
detecting, by the BRAS, that the CGN fails (S101); after detecting the CGN fails, receiving, by the BRAS, an access request sent by a terminal (S102); and
assigning and sending, by the BRAS, a public Internet protocol, IP, address to the terminal in order to allow the terminal to communicate in absence of the CGN (S103);
wherein the assigning, by the BRAS, the public IP address to the terminal specifically comprises:
sending, by the BRAS, an address assignment request to a device configured with a standby public address pool, wherein the address assignment request carries identification information of the BRAS;
receiving, by the BRAS, an address assignment response returned by the device configured with the standby public address pool, wherein the address assignment response carries at least one public IP address; and
assigning, by the BRAS, the public IP address to the terminal from the at least one public IP address.

2. The method according to claim 1, wherein the device configured with the standby public address pool is a dynamic host configuration protocol, DHCP, server or a BRAS having a DHCP server function in the network, and the address assignment response carries a public IP address assigned by the DHCP server to the BRAS.

3. The method according to claim 2, wherein the address assignment request further comprises:
a request identifier of a public IP address range, used to request to acquire a segment of public IP address; the address assignment response further carries a mask assigned to the public IP address, wherein the mask is assigned by the DHCP server or the BRAS having the DHCP server function in the network;
after the receiving, by the BRAS, the address assignment response returned by the device configured with the standby public address pool, the method further comprises:
acquiring, by the BRAS according to the public IP address and the mask, a segment of public IP address corresponding to the public IP address and the mask.

4. The method according to any one of claims 1 to 3, wherein before the detecting, by the BRAS, that the CGN fails, the method further comprises:
receiving, by the BRAS, an access request sent by the terminal; and
assigning, by the BRAS, a private IP address to the terminal in the private address pool on the BRAS;
after the detecting, by the BRAS, that the CGN fails, the method further comprises:
deleting, by the BRAS, a user entry of the terminal on the BRAS, so that the terminal re-sends an access request.

5. A broadband remote access server, BRAS, supporting carrier grade net address translation, CGN, capability, and the BRAS comprises:
a detecting unit, configured to detect that the CGN fails;
a receiver, configured to receive an access request sent by a terminal after detecting the CGN fails;
a processing unit, configured to assign and send a public Internet protocol, IP, address to the terminal in order to allow the terminal to communicate in absence of the CGN; and
the BRAS further comprises:
a sender, configured to send an address assignment request to a device configured with a standby public address pool, wherein the address assignment request carries identification information of the BRAS,
wherein the receiver is further configured to: receive an address assignment response returned by the device configured with the standby public address pool, wherein the address assignment response carries at least one public IP address; and
the processing unit is specifically configured to: assign the public IP address to the terminal from the at least one public IP address.

6. The broadband remote access server according to claim 5, wherein the device configured with the standby public address pool is a dynamic host configuration protocol, DHCP, server or a BRAS having a DHCP server function in the network, and the address assignment response received by the receiver carries a public IP address assigned by the DHCP server or the BRAS having the DHCP server function in the network to the BRAS.

7. The broadband remote access server according to claim 6, wherein the address assignment request sent by the sender further comprises: a request identifier of a public IP address segment, used to request to acquire a segment of public IP address;
the address assignment response received by the receiver further carries a mask assigned to the public IP address, wherein the mask is assigned by the DHCP server or the BRAS having the DHCP server function in the network; and
the processing unit is further configured to: acquire, according to the public IP address and the mask, a segment of public IP address corresponding to the public IP address and the mask.

8. An address assignment system, comprising: at least one of the broadband remote access server, BRAS, according to any one of claims 5-7 and a device configured with a standby public address pool;
wherein the device configured with the standby public address pool is configured to:
store standby public Internet protocol, IP, addresses;
receive an address assignment request sent by the BRAS, wherein the address assignment request carries identification information of the BRAS;
assign, according to the identification information of the BRAS, at least one public IP address to the BRAS in the standby public address pool; and
return an address assignment response to the BRAS, wherein the address assignment response carries the at least one public IP address; and
wherein the device configured with a standby public address pool is another BRAS having a DHCP server function in the network.

## Patentansprüche

1. Adresszuweisungsverfahren, welches für ein Netz mit einem Breitband-Fernzugriffsserver (Broadband Remote Access Server, BRAS) anwendbar ist, wobei der BRAS eine Fähigkeit zur Netzadressenübersetzung auf Betreiberebene (Carrier Grade Net Address Translation, CGN) unterstützt, wobei das Verfahren umfasst:
Erkennen, durch den BRAS, dass die CGN fehlschlägt (S101);
nach dem Erkennen, dass die CGN fehlschlägt, Empfangen, durch den BRAS, einer von einem Endgerät gesendeten Zugriffsanforderung (S102);
und
Zuweisen und Senden, durch den BRAS, einer öffentlichen Internet Protocol", IP, - Adresse an das Endgerät, um dem Endgerät zu ermöglichen, bei fehlender CGN zu kommunizieren (S103);
wobei das Zuweisen, durch den BRAS, der öffentlichen IP-Adresse an das Endgerät insbesondere umfasst:
Senden, durch den BRAS, einer Adresszuweisungsanforderung an eine Vorrichtung, die mit einem Pool als Reserve bereitgehaltener öffentlicher Adressen konfiguriert ist, wobei die Adresszuweisungsanforderung Identifikationsinformationen des BRAS enthält;
Empfangen, durch den BRAS, einer Adresszuweisungsantwort, die von der Vorrichtung, die mit dem Pool als Reserve bereitgehaltener öffentlicher Adressen konfiguriert ist, zurückgesendet wurde, wobei die Adresszuweisungsantwort wenigstens eine öffentliche IP-Adresse enthält; und
Zuweisen, durch den BRAS, der öffentlichen IP-Adresse an das Endgerät aus der wenigstens einen öffentlichen IP-Adresse.

2. Verfahren nach Anspruch 1, wobei die Vorrichtung, die mit dem Pool als Reserve bereitgehaltener öffentlicher Adressen konfiguriert ist, ein "Dynamic Host Configuration Protocol"(DHCP)-Server oder ein BRAS mit einer DHCP-Server-Funktion im Netz ist und die Adresszuweisungsantwort eine öffentliche IP-Adresse enthält, die dem BRAS von dem DHCP-Server zugewiesen wird.

3. Verfahren nach Anspruch 2, wobei die Adresszuweisungsanforderung ferner umfasst: eine Anforderungskennung eines Bereichs öffentlicher IP-Adressen, die verwendet wird, um anzufordern, ein Segment öffentlicher IP-Adressen zu erwerben; wobei die Adresszuweisungsantwort ferner eine Maske enthält, die der öffentlichen IP-Adresse zugewiesen wird, wobei die Maske von dem DHCP-Server oder dem BRAS mit der DHCP-Server-Funktion im Netz zugewiesen wird;
wobei nach dem Empfangen, durch den BRAS, der Adresszuweisungsantwort, die von der Vorrichtung, die mit dem Pool als Reserve bereitgehaltener öffentlicher Adressen konfiguriert ist, zurückgesendet wurde, das Verfahren ferner umfasst:
Erwerben, durch den BRAS gemäß der öffentlichen IP-Adresse und der Maske, eines Segments öffentlicher IP-Adressen, das der öffentlichen IP-Adresse und der Maske entspricht.

4. Verfahren nach einem der Ansprüche 1 bis 3, wobei vor dem Erkennen, durch den BRAS, dass die CGN fehlschlägt, das Verfahren ferner umfasst:
Empfangen, durch den BRAS, einer von dem Endgerät gesendeten Zugriffsanforderung; und
Zuweisen, durch den BRAS, einer privaten IP-Adresse an das Endgerät in dem Pool privater IP-Adressen auf dem BRAS;
wobei nach dem Erkennen, durch den BRAS, dass die CGN fehlschlägt, das Verfahren ferner umfasst:
Löschen, durch den BRAS, eines Benutzereintrags des Endgeräts auf dem BRAS, so dass das Endgerät eine Zugriffsanforderung erneut sendet.

5. Breitband-Fernzugriffsserver (Broadband Remote Access Server, BRAS), welcher eine Fähigkeit zur Netzadressenübersetzung auf Betreiberebene (Carrier Grade Net Address Translation, CGN) unterstützt, wobei der BRAS umfasst:
eine Erkennungseinheit, die dafür ausgelegt ist zu erkennen, dass die CGN fehlschlägt;
einen Empfänger, der dafür ausgelegt ist, nach dem Erkennen, dass die CGN fehlschlägt, eine von einem Endgerät gesendete Zugriffsanforderung zu empfangen;
eine Verarbeitungseinheit, die dafür ausgelegt ist, eine öffentliche "Internet Protocol"(IP)-Adresse an das Endgerät zuzuweisen und zu senden, um dem Endgerät zu ermöglichen, bei fehlender CGN zu kommunizieren; und
der BRAS ferner umfasst:
einen Sender, der dafür ausgelegt ist, eine Adresszuweisungsanforderung an eine Vorrichtung, die mit einem Pool als Reserve bereitgehaltener öffentlicher Adressen konfiguriert ist, zu senden, wobei die Adresszuweisungsanforderung Identifikationsinformationen des BRAS enthält;
wobei der Empfänger ferner dafür ausgelegt ist: eine Adresszuweisungsantwort zu empfangen, die von der Vorrichtung, die mit dem Pool als Reserve bereitgehaltener öffentlicher Adressen konfiguriert ist, zurückgesendet wurde, wobei die Adresszuweisungsantwort wenigstens eine öffentliche IP-Adresse enthält; und
die Verarbeitungseinheit insbesondere dafür ausgelegt ist: die öffentliche IP-Adresse an das Endgerät aus der wenigstens einen öffentlichen IP-Adresse zuzuweisen.

6. Breitband-Fernzugriffsserver nach Anspruch 5, wobei die Vorrichtung, die mit dem Pool als Reserve bereitgehaltener öffentlicher Adressen konfiguriert ist, ein "Dynamic Host Configuration Protocol"(DHCP)-Server oder ein BRAS mit einer DHCP-Server-Funktion im Netz ist und die Adresszuweisungsantwort, die durch den Empfänger empfangen wird, eine öffentliche IP-Adresse enthält, die dem BRAS von dem DHCP-Server oder dem BRAS mit der DHCP-Server-Funktion im Netz zugewiesen wird.

7. Breitband-Fernzugriffsserver nach Anspruch 6, wobei die Adresszuweisungsanforderung, die von dem Sender gesendet wird, ferner umfasst:
eine Anforderungskennung eines öffentlichen IP-Adresssegments, die verwendet wird, um anzufordern, ein Segment öffentlicher IP-Adressen zu erwerben;
wobei die Adresszuweisungsantwort, die durch den Empfänger empfangen wird, ferner eine Maske enthält, die der öffentlichen IP-Adresse zugewiesen wird, wobei die Maske von dem DHCP-Server oder dem BRAS mit der DHCP-Server-Funktion im Netz zugewiesen wird; und
die Verarbeitungseinheit ferner dafür ausgelegt ist: gemäß der öffentlichen IP-Adresse und der Maske ein Segment öffentlicher IP-Adressen zu erwerben, das der öffentlichen IP-Adresse und der Maske entspricht.

8. Adresszuweisungssystem, welches umfasst: wenigstens eines aus einem Breitband-Fernzugriffsserver (Broadband Remote Access Server, BRAS) nach einem der Ansprüche 5-7 und einer Vorrichtung, die mit einem Pool als Reserve bereitgehaltener öffentlicher Adressen konfiguriert ist;
wobei die Vorrichtung, die mit dem Pool als Reserve bereitgehaltener öffentlicher Adressen konfiguriert ist, dafür ausgelegt ist:
als Reserve bereitgehaltene öffentliche "Internet Protocol"(IP)-Adressen zu speichern;
eine von dem BRAS gesendete Adresszuweisungsanforderung zu empfangen, wobei die Adresszuweisungsanforderung Identifikationsinformationen des BRAS enthält;
gemäß den Identifikationsinformationen des BRAS dem BRAS wenigstens eine öffentliche IP-Adresse in dem Pool als Reserve bereitgehaltener öffentlicher Adressen zuzuweisen; und
eine Adresszuweisungsantwort an den BRAS zurückzusenden, wobei die Adresszuweisungsantwort die wenigstens eine öffentliche IP-Adresse enthält; und
wobei die Vorrichtung, die mit dem Pool als Reserve bereitgehaltener öffentlicher Adressen konfiguriert ist, ein weiterer BRAS ist, der eine DHCP-Server-Funktion im Netz aufweist.

## Revendications

1. Procédé d'attribution d'adresse qui peut être appliqué à un réseau ayant un serveur d'accès distant à large bande (BRAS), dans lequel le serveur BRAS prend en charge une capacité de traduction d'adresse de réseau de classe opérateur (CGN), le procédé consistant :
à détecter, au moyen du serveur BRAS, que le réseau CGN est défaillant (5101) ;
après la détection que le réseau CGN est défaillant, à recevoir, au moyen du serveur BRAS, une demande d'accès envoyée par un terminal (S102) ; et
à attribuer et à envoyer, au moyen du serveur BRAS, une adresse de protocole Internet (IP) publique au terminal afin de permettre au terminal de communiquer en l'absence du réseau CGN (S103) ;
dans lequel l'attribution, au moyen du serveur BRAS, de l'adresse de IP publique au terminal consiste spécialement à :
envoyer, au moyen du serveur BRAS, une demande d'attribution d'adresse à un dispositif configuré avec un groupe d'adresses publiques de réserve, dans lequel la demande d'attribution d'adresse comporte des informations d'identification du serveur BRAS;
recevoir, au moyen du serveur BRAS, une réponse d'attribution d'adresse renvoyée par le dispositif configuré avec le groupe d'adresses publiques de réserve, dans lequel la réponse d'attribution d'adresse comporte au moins une adresse IP publique ; et
attribuer, au moyen du serveur BRAS, l'adresse IP publique au terminal parmi la ou les adresses IP publiques.

2. Procédé selon la revendication 1, dans lequel le dispositif configuré avec le groupe d'adresses publiques de réserve est un serveur de protocole de configuration hôte dynamique (DHCP) ou un serveur BRAS ayant une fonction de serveur DHCP dans le réseau et la réponse d'attribution d'adresse comporte une adresse IP publique attribuée par le serveur DHCP au serveur BRAS.

3. Procédé selon la revendication 2, dans lequel la demande d'attribution d'adresse comprend en outre : un identifiant de demande d'une gamme d'adresses IP publiques, utilisé pour demander à acquérir un segment d'adresse IP publique ; la réponse d'attribution d'adresse comporte en outre un masque attribué à l'adresse IP publique, dans lequel le masque est attribué par le serveur DHCP ou le serveur BRAS ayant la fonction de serveur DHCP dans le réseau ;
après la réception, au moyen du serveur BRAS, de la réponse d'attribution d'adresse renvoyée par le dispositif configuré avec le groupe d'adresses publiques de réserve, le procédé consiste en outre à :
acquérir, au moyen du serveur BRAS en fonction de l'adresse IP publique et du masque, un segment d'adresse IP publique correspondant à l'adresse IP publique et au masque.

4. Procédé selon l'une quelconque des revendications 1 à 3, dans lequel, avant la détection, au moyen du serveur BRAS, que le réseau CGN est défaillant, le procédé consiste en outre à :
recevoir, au moyen du serveur BRAS, une demande d'accès envoyée par le terminal ; et
attribuer, au moyen du serveur BRAS, une adresse IP privée au terminal du groupe d'adresses privées sur le serveur BRAS ;
après la détection, au moyen du serveur BRAS, que le réseau CGN est défaillant, le procédé consiste en outre à :
supprimer, au moyen du serveur BRAS, une entrée d'utilisateur du terminal sur le serveur BRAS de telle sorte que le terminal renvoie une demande d'accès.

5. Serveur d'accès distant à large bande (BRAS), prenant en charge une capacité de traduction d'adresse de réseau de classe opérateur (CGN), le serveur BRAS comprenant :
une unité de détection, configurée pour détecter que le réseau CGN est défaillant ;
un dispositif de réception, configuré pour recevoir une demande d'accès envoyée par un terminal après la détection que le réseau CGN est défaillant ;
une unité de traitement, configurée pour attribuer et envoyer une adresse de protocole Internet (IP) publique au terminal afin de permettre au terminal de communiquer en l'absence du réseau CGN ; et
le serveur BRAS comprend en outre :
un dispositif d'envoi, configuré pour envoyer une demande d'attribution d'adresse à un dispositif configuré avec un groupe d'adresses publiques de réserve, dans lequel la demande d'attribution d'adresse comporte des informations d'identification du serveur BRAS,
dans lequel le dispositif de réception est en outre configuré pour : recevoir une réponse d'attribution d'adresse renvoyée par le dispositif configuré avec le groupe d'adresses publiques de réserve, dans lequel la réponse d'attribution d'adresse comporte au moins une adresse IP publique ; et
l'unité de traitement est spécialement configurée pour : attribuer l'adresse IP publique au terminal parmi la ou les adresses IP publiques.

6. Serveur d'accès distant à large bande selon la revendication 5, dans lequel le dispositif configuré avec le groupe d'adresses publiques de réserve est un serveur de protocole de configuration hôte dynamique (DHCP) ou un serveur BRAS ayant une fonction de serveur DHCP dans le réseau et la réponse d'attribution d'adresse reçue par le dispositif de réception comporte une adresse IP publique attribuée par le serveur DHCP ou le serveur BRAS ayant la fonction de serveur DHCP au serveur BRAS.

7. Serveur d'accès distant à large bande selon la revendication 6, dans lequel la demande d'attribution d'adresse envoyée par le dispositif d'envoi comprend en outre :
un identifiant de demande d'un segment d'adresse IP publique utilisé pour demander d'acquérir un segment d'adresse IP publique ;
la réponse d'attribution d'adresse reçue par le dispositif de réception comporte en outre un masque attribué à l'adresse IP publique, dans lequel le masque est attribué par le serveur DHCP ou le serveur BRAS ayant la fonction de serveur DHCP dans le réseau ; et
l'unité de traitement est en outre configurée pour : acquérir, en fonction de l'adresse IP publique et du masque, un segment d'adresse IP publique correspondant à l'adresse IP publique et au masque.

8. Système d'attribution d'adresse, comprenant : un serveur d'accès distant à large bande (BRAS) selon l'une quelconque des revendications 5 à 7 et/ou un dispositif configuré avec le groupe d'adresses publiques de réserve ;
dans lequel le dispositif configuré avec le groupe d'adresses publiques de réserve est configuré pour :
stocker des adresses de protocole Internet (IP) publiques de réserve ;
recevoir une demande d'attribution d'adresse envoyée par le serveur BRAS, dans lequel la demande d'attribution d'adresse comporte des informations d'identification du serveur BRAS ;
attribuer, en fonction des informations d'identification du serveur BRAS, au moins une adresse IP publique au serveur BRAS dans le groupe d'adresses publiques de réserve ; et
renvoyer une réponse d'attribution d'adresse au serveur BRAS, dans lequel la réponse d'attribution d'adresse comporte la ou les adresses IP publiques ; et
dans lequel le dispositif configuré avec le groupe d'adresses publiques de réserve est un autre serveur BRAS ayant une fonction de serveur DHCP dans le réseau.
